# EUROPEAN PATENT APPLICATION

(11) **EP 4 037 141 A1**
(43) Date of publication of application: **03.08.2022**
(21) Application number: 22152205.5
(22) Date of filing: 19.01.2022
(51) Int. Cl.: H02J 7/34

(54) **MODULARIZED RESCUE DEVICE FOR SUPER CAPACITOR AND METHOD OF CONTROLLING THE SAME REMOTELY**

(30) Priority: 01.02.2021 TW 110103746
(71) Applicant: Reduce Carbon Energy Develop Co., Ltd., New Taipei City 238 (TW)
(72) Inventor: CHEN, FU-CHIEH, 238 NEW TAIPEI CITY (TW)
(74) Representative: Brown, Michael Stanley

(57) **Abstract**

A modularized rescue device for a super capacitor (20), the super capacitor (20) is connected with a secondary battery (10) parallelly to form a circuitry configured to supply power to a load (60). The modularized rescue device contains: a control module (31), a wireless communication module (35), a relay (37), and a charging module (38). The control module (31) includes a microprocessor (32), a detection unit (33), and a controlling unit (34). The microprocessor (32) is communicated with a power rescue application (APP) (36) via the wireless communication module (35). The power rescue application (36) is built in a smart mobile device. The relay (37) is connected with a first control circuit via a first switch (41), and the relay (37) is connected with a second control circuit via a second switch (42). The control unit is configured to control the first switch (41) and the second switch (42) to be in a closed circuit or an open circuit.

## Description

### FIELD OF THE INVENTION

The present invention relates to a battery.

### BACKGROUND OF THE INVENTION

When a low voltage of a conventional secondary battery of the circuitry occurs, the load of the circuitry cannot be started. Accordingly, a power rescue system for the secondary battery is essential.

The present invention has arisen to mitigate and/or obviate the afore-described disadvantages.

### SUMMARY OF THE INVENTION

The primary objective of the present invention is to provide a modularized rescue device for a super capacitor and a method of controlling the same remotely which are capable of controlling the secondary battery to charge the power to and discharge the power from the load of the circuitry so that when the second secondary battery is in the low voltage, the modularized rescue device controls the secondary battery to charge the power to the super capacitor, and the super capacitor charges and discharges the power instantly, such that the load of the circuitry is started by the secondary battery.

To obtain above-mentioned objective, a modularized rescue device for a super capacitor provided by the present invention, the super capacitor is connected with a secondary battery in parallel to form a circuitry which is configured to supply power to a load, and the modularized rescue device contains: a control module, a wireless communication module, a relay, and a charging module.

The control module includes a microprocessor, a detection unit, and a controlling unit.

The microprocessor is configured to instruct, control, command, and manage the detection unit and the controlling unit.

The microprocessor is communicated with a power rescue application (APP) via the wireless communication module, and the power rescue application is built in a smart mobile device.

The detection unit is configured to detect a voltage of the secondary battery and a voltage of the super capacitor.

The charging module is connected with the secondary battery and the super capacitor in parallel.

The controlling unit is electrically connected with the relay, the relay is connected with a first control circuit via a first switch, and the relay is connected with a second control circuit via a second switch. The control unit is configured to control the first switch and the second switch to be in a closed circuit or an open circuit.

The first control circuit is applicable for the relay, the super capacitor, the secondary battery, and the load.

The second control circuit is applicable for the relay, the charging module, the secondary battery, the super capacitor, and the load.

Only one of the first control circuit and the second control circuit is turned on.

A method of controlling the modularized rescue device remotely provided by the present invention contains steps of:
1) receiving control commands from a power rescue APP by using a microprocessor, wherein the control commands are sent from the power rescue APP when a load of a circuitry is not started by a user of a smart mobile device;
2) instructing a detection unit to detect a voltage of a secondary battery and a voltage of a super capacitor by way of a microprocessor to obtain a low voltage message;
3) commanding a controlling unit to control a first switch to be in an open circuit by using the microprocessor and to control a second switch to be in a closed circuit, wherein the second switch is in communication with a second control circuit, and a charging module sends the voltage of the secondary battery to the super capacitor;
4) detecting whether the voltage of the super capacitor reaches an operating voltage of starting the load by way of the detection unit, wherein when the voltage of the super capacitor reaches the operating voltage of starting the load, the controlling unit controls the second switch to be in the opened circuit so as to turn off the second control circuit, and the charging module does not change a power to the super capacitor; and
5) controlling the first switch to communicate with the first control circuit by using the controlling unit, wherein the super capacitor charges the power to and discharges the power from secondary battery instantly so that the load is started by the secondary battery, thus supplying the power to the load.

Preferably, when the power rescue APP is operated repeatedly to send control commands in a short time successively so that the microprocessor receives the control commands in the short time continuously to execute the step 3) repeatedly, hence the voltage of the secondary battery is sent to the super capacitor repeatedly so as to raise the voltage of the super capacitor to the operating voltage, thus executing the step 4).

Thereby, the detection unit is configured to detect the voltage of the secondary battery in a normal state, and the controlling unit is configured to control the first switch to be in the closed circuit and to control the second switch to be in the open circuit, wherein the first switch is electrically communicated with the first control circuit so that the secondary battery charges the power to and discharges the power from the load of the circuitry in a predetermined electric current. The super capacitor is connected with the secondary battery in parallel to reduce a charging load and a discharging load, thus prolonging a service life of the secondary battery.

When the secondary battery is in the low voltage, the first control circuit is turned off, and the second control circuit is turned on so that the charging module changes the voltage of the secondary battery to the super capacitor until the voltage of the super capacitor reaches the operating voltage of the load of the circuitry, and the second control circuit is turned off, such that the charging module does not charge the power to the super capacitor, and the first control circuit is turned on, hence the super capacitor charges and discharges the power instantly so that the load is started by the secondary battery, thus recovering charging and discharging of the power in a large electric current to supply the power to the load.

The method of the present invention is operated in the smart mobile device by using the power rescue application (APP) to supply the power in a remote controlling manner easily and quickly.

Preferably, the control commands are sent in the short time repeatedly to turn on the first control circuit and to turn on the second control circuit, such that the voltage of the secondary battery is sent to the super capacitor, thus raising the voltage of the super capacitor to the operating voltage.

The secondary battery includes but is not limited to a lead-acid battery, a nickel-hydrogen battery, a lithium-ion battery, a nickel-cadmium battery, and a polymer lithium battery.

The load of the circuitry is various devices, equipment and systems that need to start and stop power or provide high-power power in a short time, including but not limited to electric vehicles, new energy vehicles, wind power, hydropower, thermal power, rail transit, medical equipment, wearable equipment, fire-fighting equipment. The modularized rescue device is also applicable for various electronic devices have high current requirements when performing certain specific functions.

The modularized rescue device is applicable for a variety of loads of circuitries based on using requirements.

The modularized rescue device is capable of building a cloud background and monitoring dispatching system, and collecting signals from all its rescue devices, secondary batteries, super capacitors, and/or power rescue applications in wireless communication manner. When an abnormal signal is found, the monitoring and repairing system send a notification to the power rescue application or its maintenance personnel, and the user can use the power rescue application to know the status of the secondary battery in advance. Thereby, the maintenance personnel will go to the designated place for maintenance after receiving the notice, so as to achieve the purpose of real-time and comprehensive monitoring and management. You can also use the information collected in the cloud background to perform big data analysis, so as to improve the technical side or expand the market application.

### BRIEF DESCRIPTION OF THE DRAWINGS

FIG. 1 is a block diagram showing the electric circuit of a modularized rescue device for a super capacitor and a method of controlling the same remotely according to a preferred embodiment of the present invention.
FIG. 2 is a block diagram showing the operation of the modularized rescue device and the method of controlling the same remotely according to the preferred embodiment of the present invention.
FIG. 3 is another block diagram showing the electric circuit of the modularized rescue device and the method of controlling the same remotely according to the preferred embodiment of the present invention.
FIG. 4 is also another block diagram showing the electric circuit of the modularized rescue device and the method of controlling the same remotely according to the preferred embodiment of the present invention.

### DETAILED DESCRIPTION OF THE PREFERRED EMBODIMENTS

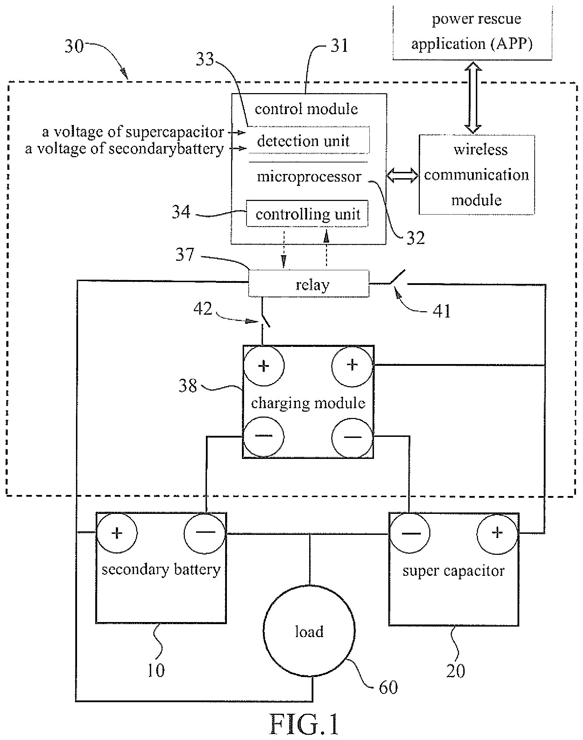

With reference to FIG. 1, a modularized rescue device 30 for a super capacitor 20 and a method of controlling the same remotely according to a preferred embodiment of the present invention, the super capacitor 20 is connected with a secondary battery 10 in parallel to form a circuitry which is configured to supply power to a load 60.

The modularized rescue device 30 comprises: a control module 31, a wireless communication module 35, a relay 37, and a charging module 38.

The control module 31 includes a microprocessor 32, a detection unit 33, and a controlling unit 34. The microprocessor 32 is configured to instruct, control, command, and manage the detection unit 33 and the controlling unit 34.

The microprocessor 32 is communicated with a power rescue application (APP) 36 via the wireless communication module 35, and the power rescue application 36 is built in a smart mobile device (not shown). The wireless communication module 35 is applicable for wireless communications but is not limited for LoRa, NB-IoT, ZigBee, WI-FI, Bluetooth, and satellite communication.

The detection unit 33 is configured to detect a voltage of the secondary battery 10 and a voltage of the super capacitor 20.

The charging module 38 is connected with the secondary battery 10 and the super capacitor 20 in parallel. The controlling unit 34 is electrically connected with the relay 37, wherein the relay 37 is capable of being replaced by metal-oxide-semiconductor field-effect transistor (MOSFET, abbreviated as MOS).

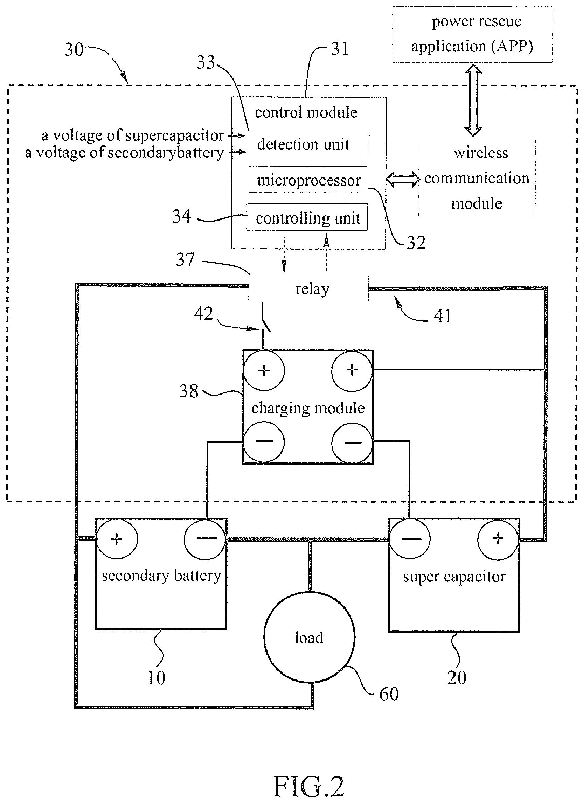

The relay 37 is connected with a first control circuit 51 (as shown in FIG. 2) via a first switch 41, and the relay 37 is connected with a second control circuit 52 via a second switch 42. The control unit 34 is configured to control the first switch 41 and the second switch 42 to be in a closed circuit or an open circuit. The first control circuit 51 is applicable for the relay 37, the super capacitor 20, the secondary battery 10, and the load 60. The second control circuit 52 is applicable for the relay 37, the charging module 38, the secondary battery 10, the super capacitor 20, and the load 60. Only one of the first control circuit 51 and the second control circuit 52 is turned on.

Referring to FIG. 2, the detection unit 33 is configured to detect the voltage of the secondary battery 10 in a normal state, and the controlling unit 34 is configured to control the first switch 41 to be in the closed circuit and to control the second switch 42 to be in the open circuit, wherein the first switch 41 is electrically communicated with the first control circuit 51 so that the secondary battery 10 charges the power to and discharges the power from the load 60 of the circuitry in a predetermined electric current. The super capacitor 20 is connected with the secondary battery 10 in parallel to reduce a charging load and a discharging load, thus prolonging a service life of the secondary battery 10.

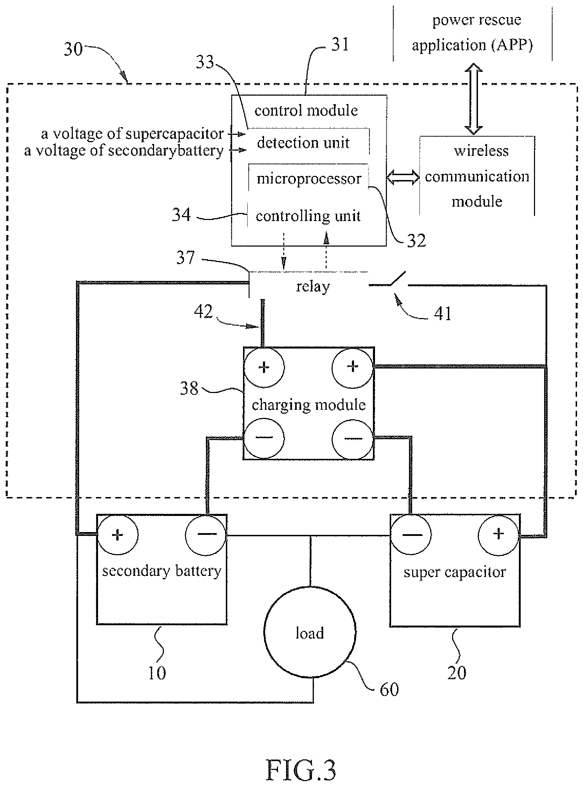

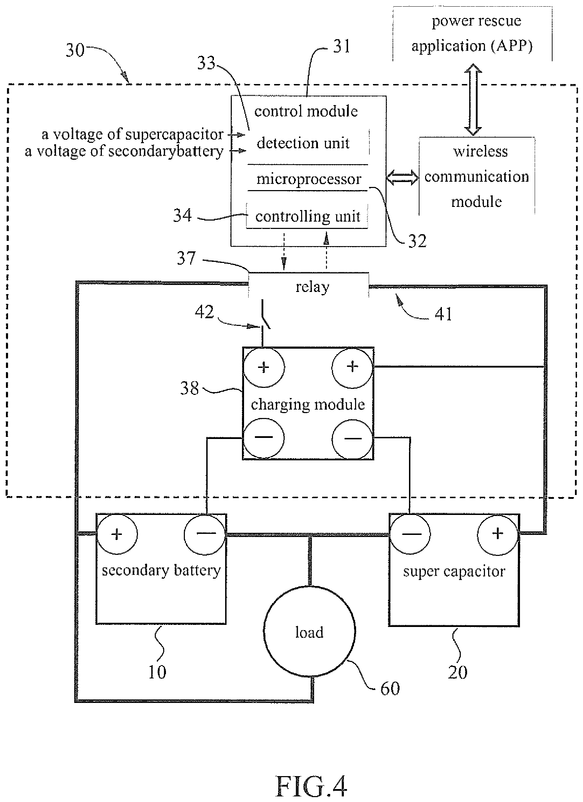

As shown in FIGS. 3-4, a method of controlling the modularized rescue device 30 remotely comprises steps of:
1) receiving control commands from the power rescue APP 36 by using the microprocessor 32, wherein the control commands are sent from the power rescue APP 36 when the load 60 of the circuitry is not started by a user of the smart mobile device;
2) instructing the detection unit 33 to detect the voltage of the secondary battery 10 and the voltage of the super capacitor 20 by way of the microprocessor 32 to obtain a low voltage message;
3) commanding the controlling unit 34 to control the first switch 41 to be in the open circuit by using the microprocessor 32 and to control the second switch 42 to be in the closed circuit, wherein the second switch 42 is in communication with the second control circuit 52, and the charging module 38 sends the voltage of the secondary battery 10 to the super capacitor 20;
4) detecting whether the voltage of the super capacitor 20 reaches an operating voltage of starting the load 60 by way of the detection unit 33, wherein when the voltage of the super capacitor 20 reaches the operating voltage of starting the load 60, the controlling unit 34 controls the second switch 42 to be in the opened circuit so as to turn off the second control circuit 52, and the charging module 38 does not change the power to the super capacitor 20; and
5) controlling the first switch 41 to communicate with the first control circuit 51 by using the controlling unit 34, wherein the super capacitor 20 charges the power to and discharges the power from secondary battery 10 instantly so that the load 60 is started by the secondary battery 10, thus recovering charging and discharging of the power in a large electric current to supply the power to the load 60.

Thereby, when the secondary battery 10 charges the power to the super capacitor 20 in a low voltage, the power flows back to the secondary battery 10 in the low voltage, then the power rescue APP 36 is operated by the user repeatedly to send control commands in a short time successively so that the microprocessor 32 receives the control commands in the short time continuously to execute the step 3) repeatedly, hence the first switch 41 and the first control circuit 51 are turned off, and the second switch 42 and the second control circuit 52 are turned on. Thereafter, the voltage of the secondary battery 10 is sent to the super capacitor 20 in the short time repeatedly so as to raise the voltage of the super capacitor 20 to the operating voltage, thus executing the step 4).

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention

## Claims

1. A modularized rescue device for a super capacitor (20), the super capacitor (20) being connected with a secondary battery (10) in parallel to form a circuitry which is configured to supply power to a load (60), and the modularized rescue device comprising:
a control module (31), a wireless communication module (35), a relay (37), and a charging module (38);
wherein the control module (31) includes a microprocessor (32), a detection unit (33), and a controlling unit (34);
wherein the microprocessor (32) is configured to instruct, control, command, and manage the detection unit (33) and the controlling unit (34);
wherein the microprocessor (32) is communicated with a power rescue application (APP) (36) via the wireless communication module (35), and the power rescue application (36) is built in a smart mobile device;
wherein the detection unit (33) is configured to detect a voltage of the secondary battery (10) and a voltage of the super capacitor (20);
wherein the charging module (38) is connected with the secondary battery (10) and the super capacitor (20) in parallel;
wherein the controlling unit (34) is electrically connected with the relay (37), the relay (37) is connected with a first control circuit (51) via a first switch (41), and the relay (37) is connected with a second control circuit (52) via a second switch (42), wherein the control unit is configured to control the first switch (41) and the second switch (42) to be in a closed circuit or an open circuit;
wherein the first control circuit (51) is applicable for the relay (37), the super capacitor (20), the secondary battery (10), and the load (60);
wherein the second control circuit (52) is applicable for the relay (37), the charging module (38), the secondary battery (10), the super capacitor (20), and the load (60); and
wherein only one of the first control circuit (51) and the second control circuit (52) is turned on.

2. A method of controlling the modularized rescue device remotely comprises steps of:
1) receiving control commands from a power rescue APP (36) by using a microprocessor (32), wherein the control commands are sent from the power rescue APP (36) when a load (60) of a circuitry is not started by a user of a smart mobile device;
2) instructing a detection unit (33) to detect a voltage of a secondary battery (10) and a voltage of a super capacitor (20) by way of a microprocessor (32) to obtain a low voltage message;
3) commanding a controlling unit (34) to control a first switch (41) to be in an open circuit by using the microprocessor (32) and to control a second switch (42) to be in a closed circuit, wherein the second switch (42) is in communication with a second control circuit (52), and a charging module (38) sends the voltage of the secondary battery (10) to the super capacitor (20);
4) detecting whether the voltage of the super capacitor (20) reaches an operating voltage of starting the load (60) by way of the detection unit (33), wherein when the voltage of the super capacitor (20) reaches the operating voltage of starting the load (60), the controlling unit (34) controls the second switch (42) to be in the opened circuit so as to turn off the second control circuit (52), and the charging module (38) does not change a power to the super capacitor (20); and
5) controlling the first switch (41) to communicate with the first control circuit (51) by using the controlling unit (34), wherein the super capacitor (20) charges the power to and discharges the power from secondary battery (10) instantly so that the load (60) is started by the secondary battery (10), thus supplying the power to the load (60).

3. The method as claimed in claim 2, wherein when the power rescue APP (36) is operated repeatedly to send control commands in a short time successively so that the microprocessor (32) receives the control commands in the short time continuously to execute the step 3) repeatedly, hence the voltage of the secondary battery (10) is sent to the super capacitor (20) repeatedly so as to raise the voltage of the super capacitor (20) to the operating voltage, thus executing the step 4).
